# EUROPEAN PATENT APPLICATION

(11) **EP 0 716 181 A2**
(43) Date of publication of application: **12.06.1996**
(21) Application number: 95830285.3
(22) Date of filing: 05.07.1995
(51) Int. Cl.: D21B 1/32, D21D 1/00, D21D 5/04

(54) **Apparatus for screening scrap material from an aqueous mixture containing recycled paper pulp, and stirring tool for use in this apparatus**

(30) Priority: 06.12.1994 IT TO940987
(71) Applicant: Ing. S. Maule & C. Spa, I-10098 Rivoli (Torino) (IT)
(72) Inventor: Tesoriere, Francesco, I-10025 Pino Torinese (Torino) (IT)
(74) Representative: Notaro, Giancarlo

(57) **Abstract**

A stirring tool (12) which can be used for example in apparatus for screening scrap material from an aqueous mixture containing recycled paper pulp, comprises blades (16) formed by metal bars having a circular cross-section.

## Description

The present invention relates to apparatus for screening scrap material from an aqueous mixture containing recycled paper pulp, comprising a container, a screening grid arranged within the container, which defines a first inner chamber in the container, for receiving the mixture to be processed, and a second inner chamber in the container, to which the mixture, freed from the refuses sorted by the grid, is to be fed, and a stirring tool rotatably mounted within said first chamber, adjacent to said grid, around an axis perpendicular to the plane of the grid, said stirring tool having a hub and a plurality of blades each curved, relative to a radial direction, in a direction opposite to the direction of rotation of the stirring tool.

An apparatus of the above indicated type is disclosed for example in EP-B-0 120 766.

In this known apparatus, the blades of the stirring tool have a cross-section with a hydrodynamical shape, in order to provide a depression in the area of said first chamber immediately adjacent to the grid so as to keep the grid free from the refuses which could obstruct it. A further feature defined as essential in the above indicated prior document, lies in that the blades of the stirring tool have a leading edge having a profile in form of a Bernoulli spiral having a constant angle of approximately 30°. This feature should assure that any particle picked up by the blades of the tool may rapidly slip outwardly as a result of the tool rotation.

Studies and experiences conducted by the applicant have shown however that the above mentioned features of the device of the prior art (Bernoulli profile and hydrodynamical cross-section of the blades) are not at all essential in order to achieve a proper operation of the tool. At the same time, the stirring tool of the prior art is of a relatively heavy and costly construction and requires a relatively high power consumption for driving its rotation.

In order to overcome this drawbacks, the present invention provides an apparatus of the type indicated at the beginning of the present description, characterized in that each of the blades of the stirring tool is comprised of a metal bar with a circular cross-section.

Due to this feature, the stirring tool of the apparatus according the invention is of simple and unexpensive construction. Furthermore, experiences conducted by the applicant have shown that the power consumption required for driving rotation of a stirring tool made according to the invention is greatly reduced with respect to that required with the apparatus of the prior art. Finally, although the cross-section of each blade is a circle, i.e. it is not a hydrodynamical cross-section able to provide a depression when the blade passes in front of the grid, the experiences conducted have shown that the stirring tool of the apparatus according to the invention is able however to prevent obstruction of the grid, during operation of the apparatus, by the refuses mixed to the paper pulp. The depression effect due to the hydrodynamical cross-section of the blades of the above mentioned known device has been noted indeed to be absolutely unessential in order to avoid the obstruction of the grid.

As it has already been indicated, the experiences conducted by the applicant have also shown that the profile in form of a Bernoulli spiral with a constant angle of 30° of the leading edge of the blades is also absolutely unessential in order to achieve the result of encouraging the refuse material which rests on the blades to be projected outwardly during rotation of the tool. As a matter of fact, it is generally sufficient that the blades are curved, with respect to a radial direction, in a direction opposite to that of rotation of the tool, as known also from the conventional art of the stirring tools of this type which were already known prior to the above mentioned European patent (see for example US Patent No. 2.826.126). It is also possible to greatly improve this effect with respect to the case of the Bernoulli spiral by using profiles in which the curvature relative to the radial direction, in the direction opposite to that of rotation of the tool, is even more marked than that of a Bernoulli profile.

As a result of studies conducted by the applicant, the use have been proved to be particularly advantageous, in the case of the present invention, of a profile of the same type which is conventionally used in cams of camshafts of internal combustion engines. Reference is made herein particularly to cams which cause a constant speed of the engine valve with a constant speed of rotation of the cam.

The present invention naturally is also directed to the above described stirring tool taken alone, to be used particularly (but not exclusively) in screening apparatus for recycled paper pulp of the type above described.

Further features and advantages of the invention will become apparent from the description which follows with reference to the annexed drawings, given purely by way of non limiting example, in which:
figure 1 is a diagrammatic view in cross section of an apparatus according to the invention,
figure 2 is a cross-sectional view at an enlarged scale taken along line II-II of figure 1, and
figure 3 is a cross-sectional view at an enlarged scale taken along line III-III of figure 2.

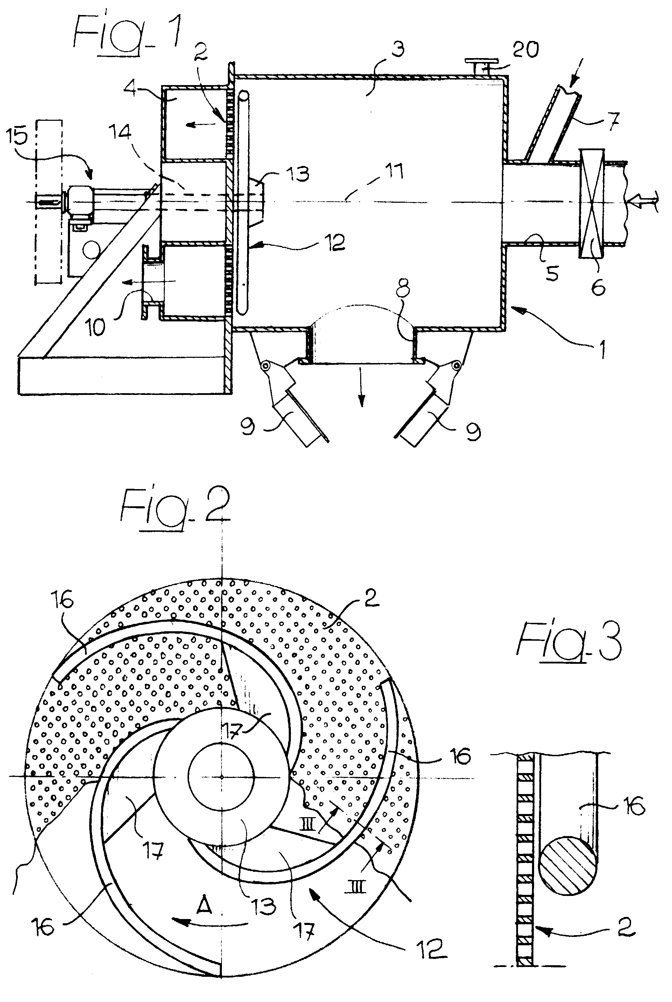

With reference to figure 1, numeral 1 designates a container having inside a screening grid 2 which defines a first chamber 3 and a second chamber 4. The first chamber 3 is to receive the paper pulp to be treated, through a conduit 5 controlled by a valve 6. There is further provided a vent opening 20 for chamber 3. Reference numerals 7, 8 respectively designate a conduit for the immission of dilution water and a lower mouth for discharging the refuses kept within chamber 3, controlled by lowerable lids 9. Chamber 4 is to receive the paper pulp which passes through grid 2 and thus freed of the refuses kept by this grid. Chamber 4 has an outlet mouth 10 for discharging the processed paper pulp, communicating with a pump (not shown) which draws the processed aqueous mixture of recycled paper pulp.

Within chamber 3, adjacent to the screening grid 2, a stirring tool 12 is rotatably mounted around an axis 11 coincident with the horizontal axis of the cylindrical body of container 1. The stirring tool 12 (figure 2) has a hub 13 rigidly connected to a shaft 14 which is rotatably supported by the body of container 1 and is connected to driving means 15, for driving its rotation. The driving means is not described herein in detail, since it can be made in any known way and does not fall, taken alone, within the scope of the present invention.

The stirring tool 12 has a plurality of blades 16 each formed by a metal bar, for example of stainless steel, curved relative to a radial direction, in a direction opposite to the direction of rotation of the stirring tool, which is indicated by arrow A in figure 2. Each bar 16 has one end welded to the hub 13 and is further provided with a welded reinforcing plate 17.

As shown in figure 3, the cross-section of each bar 16 is exactly circular.

Also according to a preferred feature of the invention, the profile of each bar 16 corresponds to a profile of the type used conventionally for cams of camshafts of internal combustion engines. Reference is made herein particularly to cams which cause a constant speed of the valve when the speed of rotation of the cam is constant.

Studies and experiences conducted by the applicant have shown that the stirring tool described above is able to avoid that the refuses contained in the processed mixture remain entrapped within the apertures of grid 2, obstructing the same. Furthermore, any refuse which tends to be picked up by the blades 16 is rapidly thrown outwardly by centrifugal force. The profile of the blades which has been defined above has proved to be much more efficient than the Bernoulli profile of the apparatus shown in EP-B-0 120 766, since it is much more curved in the direction opposite to the direction of rotation of the stirring tool.

Along with said advantages, the stirring tool according to the invention allows the manufacturing operations to be greatly simplified with respect to the solutions of the prior art, thus reducing dramatically their costs. Also the power consumption required for driving rotation of the stirring tool is greatly reduced with respect to the prior art, which enables the size of the driving motor and the power consumption during operation of the apparatus to be reduced.

As already indicated, the stirring tool according to the invention is naturally adapted to be used also in apparatus different from that which has been shown in the annexed drawings purely by way of example.

Obviously, also, while the principle of the invention remains the same, the details of construction and the embodiments may widely vary with respect to what has been described and illustrated. For example, although solid bars 16 have been shown, these bars could also be formed by tubular elements.

## Claims

1. Apparatus for screening scrap material from an aqueous mixture containing recycled paper pulp, comprising a container (1), a screening grid (2) within the container which defines a first inner chamber (3) in the container (1), for receiving the mixture to be processed, and a second inner chamber (4) in the container (1), to which the mixture freed from the refuses sorted by the grid (2), is to be fed, and a stirring tool (12) rotatably mounted within said first chamber (3) adjacent to said grid (2), around an axis (11) perpendicular to the plane of the grid (2), said stirring tool (12) having a hub (13) and a plurality of blades each curved relative to a radial direction, in a direction opposite to the direction of rotation (A) of the stirring tool (12), characterized in that each of said blades (12) is formed by a metal bar having a circular cross-section.

2. Apparatus according to claim 1, characterized in that each metal bar with a circular cross section (16) is curved according to a profile corresponding to a profile of a type conventionally used for the cams of camshafts of internal combustion engines.

3. Stirring tool, particularly for apparatus for screening scrap material from an aqueous mixture containing recycled paper pulp, comprising a hub (13) and a plurality of blades (16) fixed to the hub (13), and each curved, relative to a radial direction, in a direction opposite to the direction of rotation (A) of the stirring tool, characterized in that each of said blades (16) is formed by a metal bar with a circular cross section.

4. Stirring tool according to claim 3, characterized in that each metal bar (16) is curved according to a profile corresponding to a profile of the type conventionally used for cams of camshafts of internal combustion engines.
